(19) Europäisches Patentamt
European Patent Office
Office européen des brevets

(11) **EP 1 667 028 A1**

(12) **EUROPEAN PATENT APPLICATION**
published in accordance with Art. 158(3) EPC

(43) Date of publication:
**07.06.2006 Bulletin 2006/23**

(51) Int Cl.:
*G06F 12/12* (1985.01)  *G06F 12/08* (1985.01)

(21) Application number: **04772377.0**

(86) International application number:
**PCT/JP2004/012421**

(22) Date of filing: **23.08.2004**

(87) International publication number:
**WO 2005/029336 (31.03.2005 Gazette 2005/13)**

(84) Designated Contracting States:
**DE FR GB IT**

(30) Priority: **19.09.2003 JP 2003327032**

(71) Applicant: **MATSUSHITA ELECTRIC INDUSTRIAL CO., LTD.**
**Kadoma-shi, Osaka 571-8501 (JP)**

(72) Inventors:
• **TANAKA, Tetsuya**
**Kyoto 619-0238 (JP)**

• **NAKANISHI, Ryuta**
**Kyoto 612-8065 (JP)**
• **KIYOHARA, Tokuzo**
**Osaka 545-0053 (JP)**
• **MORISHITA, Hiroyuki**
**Osaka 561-0862 (JP)**
• **CHIKAMURA, Keishi**
**Osaka 538-0051 (JP)**

(74) Representative: **Balsters, Robert et al**
**Novagraaf International S.A.**
**25, avenue du Pailly**
**1220 Les Avanchets - Geneva (CH)**

(54) **CACHE MEMORY AND CACHE MEMORY CONTROL METHOD**

(57) A cache memory of the present invention includes: for each cache entry, way 0 to way 3 which hold use flags U indicating whether or not the use flags U have been accessed; and a control unit which: updates, when a cache entry is hit, a use flag U corresponding to the hit cache entry so that the use flag U indicates that the cache entry has been accessed; and reset, in the case where all other use flags in the same set indicates that the cache entries have been accessed herein, the all other use flags so that the use flags indicate that the cache entries have not been accessed; and select a cache entry to be replaced from among the cache entries corresponding to the use flags indicating that the cache entries have not been accessed.

FIG. 16

## Description

### Technical Field

The present invention relates to a cache memory for realizing a high-speed memory access of a processor and a control method thereof.

### Background Art

The Least Recently Used (LRU) method and the First In First Out (FIFO) method are well known as an algorithm for replacing an entry in a conventional cache memory.

The LRU method is a method for determining an entry to be replaced so that the entry is the one whose access order is the oldest among all cache entries. This LRU method is, for example, the most commonly used replacement algorithm that is adopted in the cache memory disclosed in Japanese Laid-Open Patent Application No. 2000-47942.

Incidentally, in order to perform replacement using the algorithm of the LRU method, a storing unit for holding data indicating access orders of respective entries and a complicated circuit for updating the access orders are required. Therefore, there is a problem that the size of hardware is expanded.

For example, in the case of a cache memory of a fully associative method having (2 to the k-th power) entries, k-bits are required for each entry as data of indicating an access order.

Also, in the case of the N-way set associative, given the number of ways N=8, (number of ways =8) $\times$ (least 3 bits) $\times$ (number of sets) is required as information indicating access orders. Thus, there is a problem that the size of storing unit (a register or a Random Access Memory (RAM)) for holding access order data and the size of a circuit for updating the access order data are large.

### Disclosure of Invention

An object of the present invention is to provide a cache memory for realizing, in a smaller hardware size, a replacement control by which a hit ratio that is equivalent to the hit ratio obtained by the LRU method can be obtained.

In order to achieve the aforementioned object, a cache memory of the present invention is a cache memory including: a storing unit which holds, for each cache entry, one-bit access information indicating whether or not the cache entry has been accessed, the cache entry holding data that is a unit of caching; and a selection unit which selects a cache entry to be replaced from among cache entries corresponding to respective pieces of access information indicating that cache entries have not been accessed.

The selection unit may be structured so as to select one cache entry randomly or by a round-robin method, from among the cache entries corresponding to the respective pieces of access information indicating that the cache entries have not been accessed.

According to this structure, instead of storing, for each cache entry, data indicating an access order in the conventional LRU method, the storing unit holds, for each cache entry, a piece of access information that can be represented in one-bit. Therefore, its memory capacity can be reduced so that the size of the hardware can be also reduced. In addition, the selection unit easily determines a target to be replaced by selecting one cache entry corresponding to the piece of access information indicating that the cache entry has not been accessed, while same level of hit ratio is acquired compared to the conventional LRU.

Here, the cache memory may further include an update unit which updates, when a cache entry is hit, a piece of access information corresponding to the cache entry so that the piece of access information indicates that the cache entry has been accessed, and resets, in the case where respective pieces of access information corresponding to all of other cache entries indicate that the cache entries have been accessed, to the pieces of access information corresponding to all of other cache entries indicating that the cache entries have not been accessed.

Accordingly, a complicated circuit which updates conventional access order data can be replaced to a simple flag update circuit which updates pieces of access information. Therefore, the size of the hardware can be further greatly reduced.

Here, the update unit may further reset a piece of access information corresponding to the hit cache entry at the time of the reset so that the piece of access information indicates that the hit cache entry has not been accessed.

Here, the storing unit may further hold, for each cache entry, a piece of new information indicating whether or not a cache entry is in a new state immediately after storage of data in the cache entry. The update unit may further reset, when a cache entry is hit, a new piece of information corresponding to the hit cache entry so that the new piece of information indicates that the hit cache entry is not in a new state. The selection unit may select a cache entry to be replaced, from among the cache entries in the same set corresponding to respective pieces of access information indicating that the cache entries have not been accessed and corresponding to respective pieces of new information indicating that the cache entries are not in a new state.

Here, the selection unit may select a cache entry to be replaced ignoring a new piece of information, in the case where there is no cache entry which corresponds to a piece of access information indicating that the cache entry has not been accessed and corresponds to the new piece of information indicating that the cache entry is not in a new state.

Here, the selection unit may select a cache entry to be replaced ignoring a new piece of information, in the case where there is only a cache entry which corresponds to one of the following: a piece of access information indicating that the cache entry has been accessed; and the new piece of information indicating that the cache entry is in a new state.

According to this structure, the replacement of the cache entry which is in a new state where the cache entry has not been accessed after the replacement can be prevented.

Also, a control method of the cache memory of the present invention is a method for controlling a cache memory including, for each cache entry of the cache memory, a storing unit for storing a piece of access information indicating whether or not the cache entry has been accessed. The method includes: a detection step of detecting a cache hit and a cache miss; a first update step of updating a piece of access information corresponding to the hit cache entry, to the piece of access information indicating that the hit cache entry has been accessed; a judging step of judging whether or not respective pieces of access information corresponding to all of cache entries other than the hit cache entry indicate that the cache entries have been accessed; a second update step of updating, in the case where a judgment result obtained in said judging step is positive, the respective pieces of access information corresponding to the all of other cache entries so that the respective pieces of access information indicate that the cache entries have not been accessed; and a selection step of selecting, when the cache miss is detected, a cache entry to be replaced, from among the cache entries corresponding to the respective pieces of access information indicating that the cache entries have not been accessed.

As described above, according to the cache memory of the present invention, the size of the hardware can be reduced, while realizing a hit ratio that is equivalent to that of the conventional LRU method.

**Brief Description of Drawings**

FIG. 1 is a block diagram showing a rough outline of a structure including a processor, a cache memory and a memory according to the first embodiment of the present invention.

FIG. 2 is a block diagram showing a structure of a cache memory.

FIG. 3 is an illustration showing a bit structure of a cache entry.

FIG. 4 is a block diagram showing a structure of a control unit.

FIG. 5 is an illustration showing an example of flag updates.

FIG. 6 is a diagram showing a flow of flag updating processing.

FIG. 7 is a diagram showing a truth value table indicating an input/output logic of a flag management unit.

FIG. 8 is a diagram showing an example of a circuit of the flag management unit.

FIG. 9 is a diagram showing a flow of replacement processing.

FIG. 10 is an illustration showing an example of flag updates according to a variation.

FIG. 11 is a diagram showing a flow of flag updating processing according to the variation.

FIG. 12A is a diagram showing another example of a selection processing according to the variation.

FIG. 12B is a diagram showing another example of the selection processing according to the variation.

FIG. 13 is a block diagram showing a structure of a cache memory according to the second embodiment of the present invention.

FIG. 14 is an illustration showing a bit structure of a cache entry.

FIG. 15 is a block diagram showing a structure of a control unit.

FIG. 16 is a diagram showing a flow of replacement processing.

FIG. 17 is a diagram showing a flow of flag updating processing.

**Best Mode for Carrying Out the Invention**

(First Embodiment)

<Overall Structure>

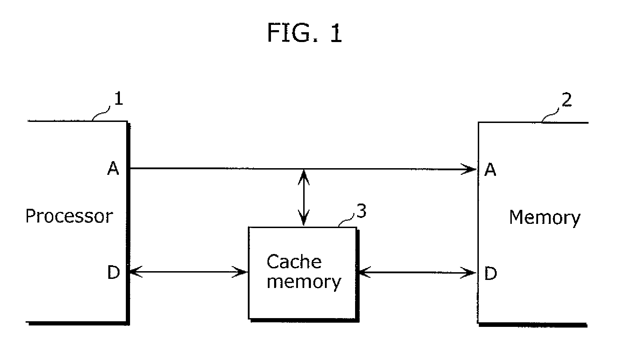

FIG. 1 is a block diagram showing a rough outline of a structure of a system including a processor 1, a cache memory 3 and a memory 2 according to the first embodiment of the present invention. As shown in the diagram, the cache memory 3 of the present invention is set in a system having the processor 1 and the memory 2, and uses a pseudo LRU method that is obtained by simplifying the LRU method as a replacement algorithm. In the present embodiment, as a pseudo LRU method, there is adopted a method of representing, only by one-bit for each cache entry, data indicating access orders of respective cache entries, and of selecting one entry to be replaced from among cache entries that are represented by a bit value of 0.

<Structure of Cache Memory>

Hereafter, as a specific example of the cache memory 3, it is explained about a structure in the case where the pseudo LRU is applied to a cache memory of a four-way set-associative method.

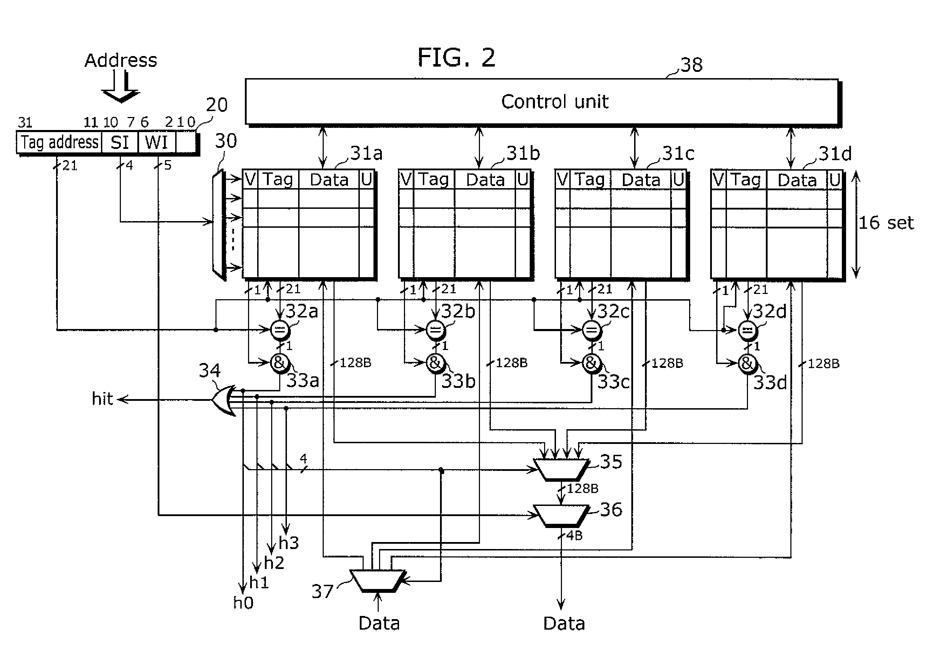

FIG. 2 is a block diagram showing an example of a structure of the cache memory 3. As shown in the diagram, the cache memory 3 includes an address register 20, a decoder 30, four ways 31a to 31d (hereafter referred to as ways 0 to 3), four comparators 32a to 32d, four AND circuits 33a to 33d, an OR circuit 34, a selector 35, a selector 36, a demultiplexer 37, and a control unit 38.

The address register 20 is a register which holds an access address for accessing to the memory 2. This access address is assumed to be 32 bits. As shown in the diagram, the access address includes, from the most significant bit in order, a tag address of 21 bits, a set index (SI in the diagram) of 4 bits, and a word index (WI in the diagram) of 5 bits. Here, the tag address indicates a region (its size is the number of sets $\times$ block) in a memory to be mapped to a way. The size of the region is 2k bytes determined by an address bit (A10 to A0 that is less significant than the tag address, and is the size of one way. The set index (SI) indicates one of the sets over the ways 0 to 3. The number of this set is 16 sets since the set index is 4 bits. A block specified by the tag address and the set index is a unit for replacement and is called as line data or a line if they are stored in the cache memory. The size of line data is 128 bytes that is the size determined by an address bits which are less significant than the set index. Assuming that one word is 4 bytes, one line data is 32 words. The word index (WI) indicates one word among words which make up of the line data. The least significant 2 bits (A1 and AO) in the address register 20 are ignored at the time of word access.

The decoder 30 decodes the 4 bits of the set index, and selects one out of 16 sets over the four ways 0 to 3.

The four ways 0 to 3 are four ways having the same structures and have a memory of $4 \times 2k$ bytes. The way 0 has 16 cache entries.

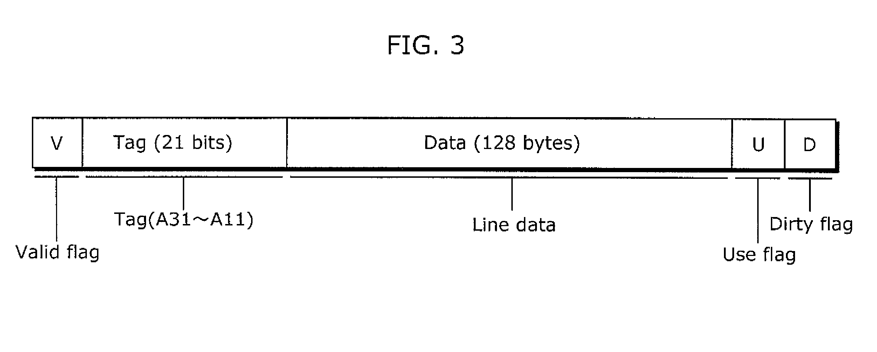

FIG. 3 shows a detailed bit structure of a cache entry. As shown in the diagram, one cache entry includes a valid flag V, a tag of 21 bits, line data of 128 bytes, a use flag U and a dirty flag D. The valid flag V indicates whether or not the cache entry is valid. The tag is a copy of the tag address of 21 bits. The line data is a copy of the 128 bytes data in a block specified by the tag address and the set index. The dirty flag indicates whether or not writing is performed on the cache entry, that is, whether or not a write back to the memory is necessary because the cached data in the cache entry is different from the data in the memory due to the writing. The use flag U indicates whether or not the cache entry has been accessed, and is used in place of an access order in the four cache entries in the set for performing replacement due to a hit miss. More precisely, 1 of the use flag U indicates that there has been an access, and 0 indicates no access. The four use flags in the set are reset to 0 when all flags become 1. Therefore, they are relative values indicating whether or not the four cache entries in the set are used. In other words, the use flag U shows one of two relative states of old and new timings of which a cache entry was accessed. In specific, a cache entry whose use flag U is 1 means that it has been accessed later than the cache entry whose use flag is 0.

The same explanation made for the way 0 is applied to the ways 1 to 3. The four cache entries from respective four ways, being selected by 4 bits of the set index via the decoder 30, are called as a set.

The comparator 32a compares the tag address in the address register 20 with a tag of the way 0 that is one of the four tags included in the set selected by the set index, so as to judge whether or not they match each other. The same explanation applies to the comparators 32b to 32c, while the comparators 32b to 32c respectively correspond to the ways 31b to 31d.

The AND circuit 33a compares the valid flag and the comparison result obtained by the comparator 32a so as to judge whether or not they match each other. It is assumed that the comparison result is h0. In the case where the comparison result h0 is 1, it is indicated that there is line data corresponding to the tag address and set index in the address register 20, that is, there is a hit in the way 0. The same explanation applies to the AND circuits 33b to 33d, while the AND circuits 33b to 33d respectively correspond to the ways 31b to 31d. The comparison results h1 to h3 respectively indicate whether there is a hit or a miss in the ways 1 to 3.

The OR circuit 34 performs OR operation of the comparison results h0 to h3. The result of the OR operation is indicated as "hit". The "hit" indicates whether or not there is a hit in the cache memory.

The selector 35 selects line data of the hit way from among the line data of the ways 0 to 3 in the selected set.

The selector 36 selects one word shown in the word index from among the line data of 32 words selected by the selector 35.

The demultiplexer 37 outputs data to be written to one of the ways 0 to 3 when data is written into a cache entry. The unit of data to be written may be a unit of a word.

The control unit 38 controls the cache memory 3 as a whole. In particular, it updates use flags U, determine a cache entry to be replaced and the like.

<Structure of Control Unit>

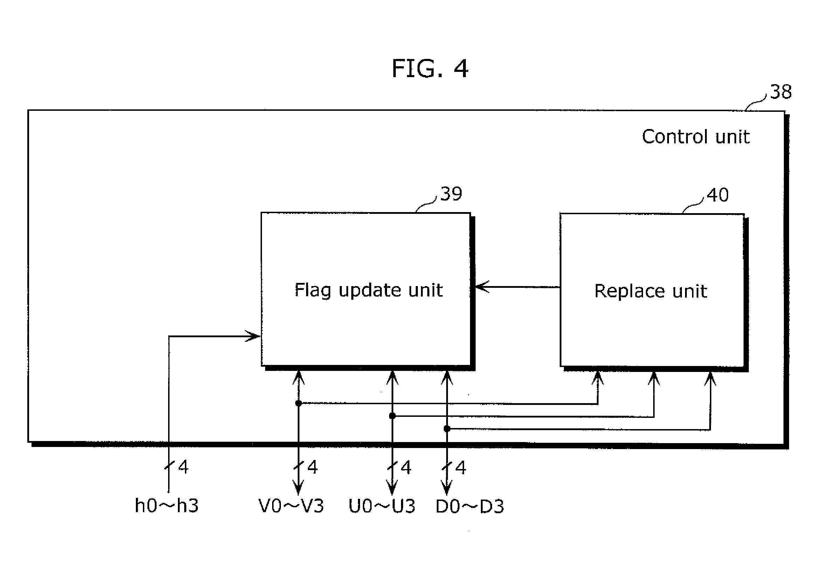

FIG. 4 is a block diagram showing a structure of the control unit 38. As shown in the diagram, the control unit 38 includes a flag update unit 39 and a replace unit 40.

The flag update unit 39 updates the valid flags V, the use flags U, and the dirty flags D. The updating processing of the valid flags V and the dirty flags D has been known. The flag updating unit 39 updates the use flags when there is a hit in a cache.

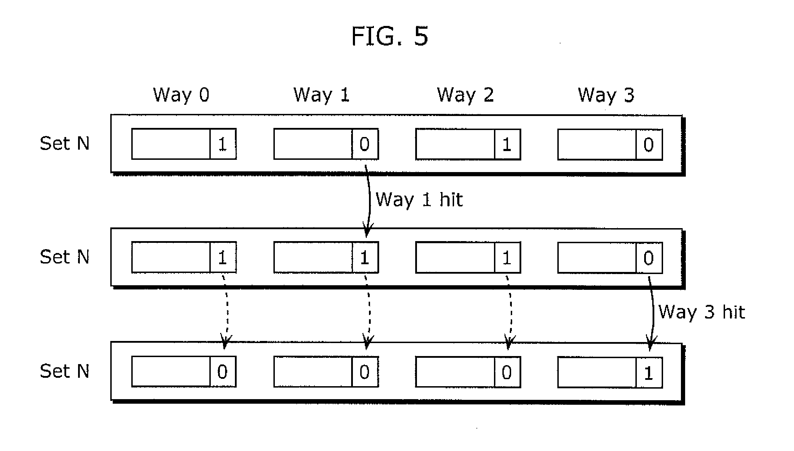

FIG. 5 shows an example of updating use flags by the flag update unit 39. In the diagram, a top tier, an intermediate tier and a bottom tier show four cache entries which make up a set N extending over the ways 0 to 3. The values 1 or 0 shown on the right edge of the four cache entries indicate values of respective use flags. These four use flags U are indicated as U0 to U3.

At the top tier in the diagram, it is shown as (U0~U3) = (1, 0, 1, 0) which indicates that the cache entries of the ways 0 and 2 have been accessed, while the cache entries of the ways 1 and 3 have not been accessed.

In such state, when the memory access is hit in the cache entry of the way 1 in the set N, the use flags U are updated to (U0~U3) = (1, 1, 1, 0) as shown in the intermediate tier in the diagram. In other words, the use flag U1 of the way 1 is updated from 0 to 1 as indicated in a solid line.

Further, in the state of the intermediate tier in the diagram, when the memory access is hit in the cache entry of the way 3 in the set N, the use flags U are updated to (U0~U3) = (0, 0, 0, 1) as shown in the bottom tier. In other words, the use flag U1 of the way 3 is updated from 0 to 1 as indicated in a solid line. In addition, the use flags U0 to U2 other than the way 3 are updated from 1 to 0 as indicated in dashed lines. Consequently, it is shown that the cache entry of the way 3 has been accessed most recently than the cache entries of the respective ways 0 to 2.

The replace unit 40 determines a cache entry to be replaced based on the use flags when there is a cache miss, and performs replacement processing. For example, the replace unit 40 determines: one of the way 1 and the way 3 as a target to be replaced in the top tier in FIG. 5; the way 3 as a target to be replaced in the intermediate tier in FIG. 5; and one of the ways 0 to 2 as a target to be replaced in the bottom tier in FIG. 5.

<Flag Updating Processing>

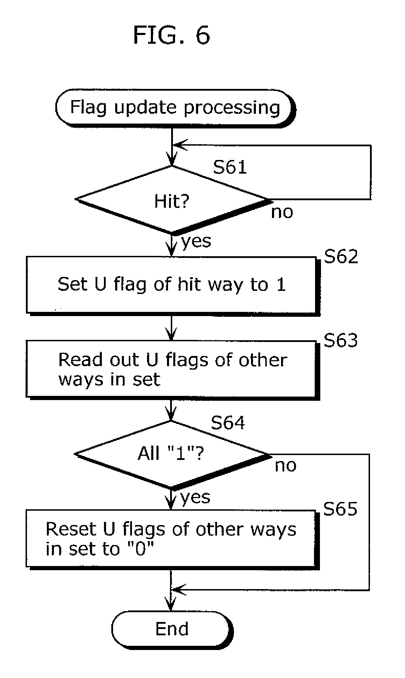

FIG. 6 is a flowchart showing a processing of updating flags by the flag update unit 39. In the diagram, it is assumed that a use flag U of a cache entry whose valid flag is 0 (invalid) is initialized.

In the diagram, when there is a cache hit (Step S61), the flag update unit 39 sets the use flag U of the hit way in the set selected by the set index to 1 (Step S62), reads out the use flags U of other ways in the set (Step S63), judges whether or not all of the read use flags U are 1 (Step S64), and terminates the processing when all flags U are not 1, and resets all use flags U of other ways to 0 when all flags U are 1 (Step S65).

Accordingly, the flag update unit 39 can update the use flags as shown in the updating example in FIG. 5.

The actual flag update unit 39 is configured as hardware. Therefore, an example of a hardware structure is explained hereafter.

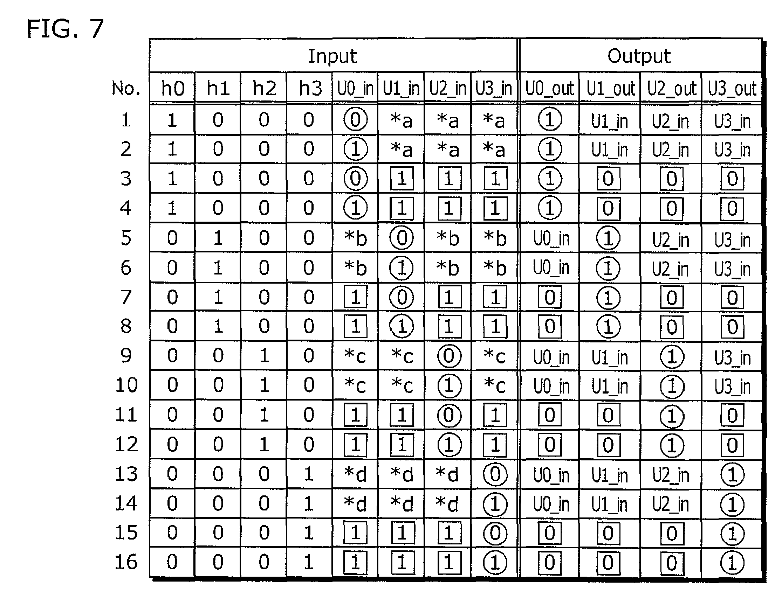

FIG. 7 is a diagram showing a truth value table showing an input/output logic of the flag update unit 39. The h0 to h3 in the input column in the diagram are hit signals respectively in the way 0 to way 3 shown in FIG. 2. U0_in to U3_in indicate values of use flags (pre-update values) of the way 0 to way 3 read out from a set selected by the set index. U0_out to U3_out in the output column in the diagram indicate values of use flags (post-update values) to be written back to the set. Also, circles in the diagram indicate use flags (input and output) of hit ways, and squares indicate when the use flags (input) of other ways are all 1 and their corresponding output values. *a to *d in the diagram indicate that the following equations 1 to 4 are respectively satisfied. Here, & indicates AND operation.

$$(U1\_in) \ \& \ (U2\_in) \ \& \ (U3\_in) = 0 \qquad (Equation\ 1)$$

$$(U0\_in) \ \& \ (U2\_in) \ \& \ (U3\_in) = 0 \qquad (Equation\ 2)$$

$$(U0\_in) \ \& \ (U1\_in) \ \& \ (U3\_in) = 0 \qquad (Equation\ 3)$$

$$(U0\_in) \ \& \ (U1\_in) \ \& \ (U2\_in) = 0 \qquad (Equation \ 4)$$

In the diagram, the rows No. 1 to No. 4 indicate the case (h0=1) where the way 0 is hit. In this case, even if the value of the use flag U0_in of the hit way 1 is 0 or 1, the use flag U0_out becomes 1. Also, the use flags U1_out to U2_out are not updated in the case of *a, but they are all updated to 0 in the case where they are all 1 as shown in squares at the time of input. The same explanation applies to the rows No. 5 to 8, No. 9 to 12, and No. 13 to 16, while they are respectively corresponding to the hit ways 1, 2, and 3.

<Circuit Example>

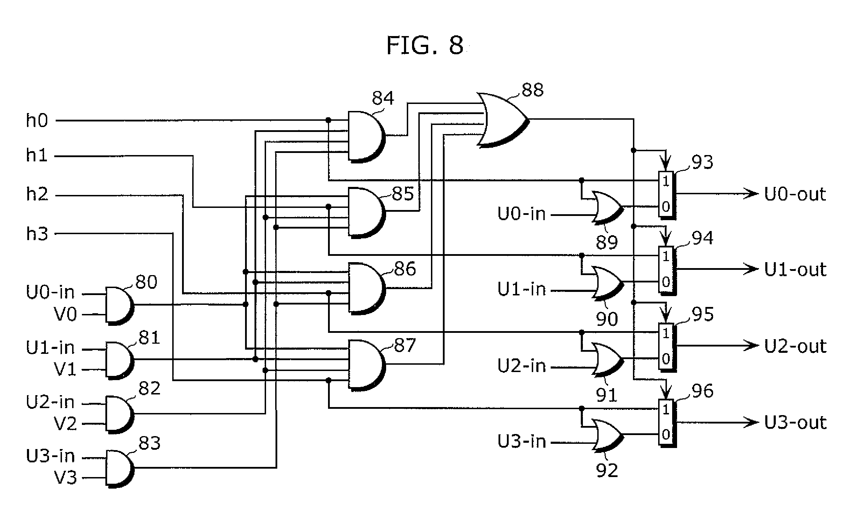

FIG. 8 is a diagram showing a detailed example of a circuit of the flag update unit 39 having the input/output logic shown in FIG. 7. The flag update unit 39 shown in the diagram includes AND circuits 80 to 83, AND circuits 84 to 87, an OR circuit 88, OR circuits 89 to 92, and selectors 93 to 96.
The AND circuits 80 to 83 respectively output values of use flags U0_in to U3_in of cache entries whose valid flags V are 1 (valid), out of the use flags U0_in to U3_in of the way 0 to way 3 read out from the set selected by the set index.
The AND circuits 84 to 87 and the OR circuit 88 detect cases shown in square marks in the input column of FIG. 7, in the case where the outputs of the AND circuits 80 to 83 do not satisfy *a to *d shown in the diagram. In other words, they detect the cases where the use flags U_in of ways other than the hit way are all 1.
The selectors 93 to 96 respectively select inputs of 1 (upper side) when the cases shown in square marks are detected, select inputs of 0 (lower side) when the cases shown in square marks are not detected, and output the selected results as U0_out to U1_out. Specifically, when the cases shown in square marks are detected, h0 to h3 are inputted to the side of 1 (upper side) of the selectors 93 to 96. Therefore, the use flag U_out of the hit way is turned to 1 and the use flags of other ways are turned to 0. When the cases shown in square marks are not detected, h signals and OR of the use flag U_in are inputted respectively to the side of 0 of the selectors 93 to 96. Therefore, the use flag U_out of the hit way is turned to 1, while the use flags of other ways remain the same.
With such circuit, the truth value table of FIG. 7 can be realized in terms of hardware. It is not necessary to show an access order of each way but only necessary to update a use flag of 1 bit for each way so that the size of hardware can be reduced.

<Replace Processing>

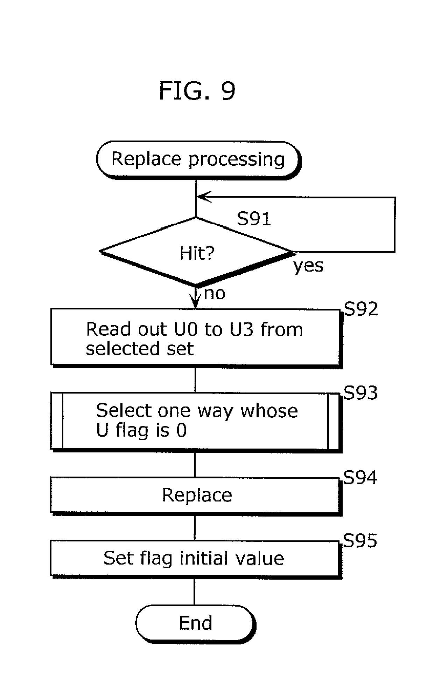

FIG. 9 is a flowchart showing a replace processing performed by the replace unit 40. In the diagram, the replace unit 40, when the memory access is missed (Step S91), reads out use flags U of four ways in the set selected by the set index (Step S92), and selects one way whose use flag U is 0 (Step S93). Herein, in the case where there are multiple ways whose use flags U are 0, the replace unit 40 randomly selects one out of them. Further, the replace unit 40 replaces a cache entry of the selected way in the set (Step S94), and initializes the use flag U of the cache entry to 1 after the replace processing (Step S95). Note that, the valid flag V and the dirty flag D are initialized respectively to 1 and 0 herein.
It should be noted that it is presumed that all of the four valid flags V are 1 (valid) in FIG. 9, in the case where there is a cache entry of V=0 (invalid), the cache entry is selected.
Thus, the target to be replaced is determined by selecting one cache entry whose use flag is 0. This replacement algorithm can be called as a pseudo LRU method since it uses a use flag of 1 bit in place of data indicating an access order in the conventional LRU method.
As explained above, in the cache memory according to the present embodiment, a use flag of 1 bit is set for each cache entry instead of setting data indicating the access order in the conventional LRU method for each cache entry. Consequently, a complicated circuit which updates a conventional access order data can be replaced to a simple flag update circuit (flag update unit 39) which updates use flags. Also, in the replace unit 40, a target to be replaced can be easily determined by selecting one of the cache entries whose use flags are 0. Thus, in the cache memory according to the present embodiment, the size of hardware can be greatly reduced. In addition, compared to the conventional LRU, almost same level of hit ratio can be obtained.

<Variations>

It should be noted that the cache memory of the present invention is not only limited to the structure described in the aforementioned embodiment, but various modifications can be applied. Hereafter, some of the variations are described.

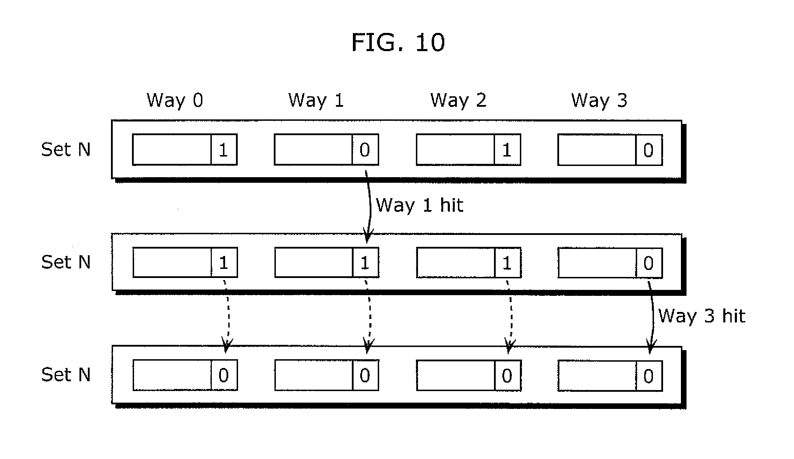

(1) The flag update unit 39 updates, when all of the use flags U0 to U3 of other ways in a set shown in the bottom tier in FIG. 5 are 1, the use flags to 0 and updates the use flag of the hit way itself to 1. Instead, it may be configured to also update the use flag of the hit way itself to 0. FIG. 10 shows an example of updating flags herein. Compared to FIG. 5, FIG. 10 differs in that the way 3 in the bottom tier is 0 instead of 1.

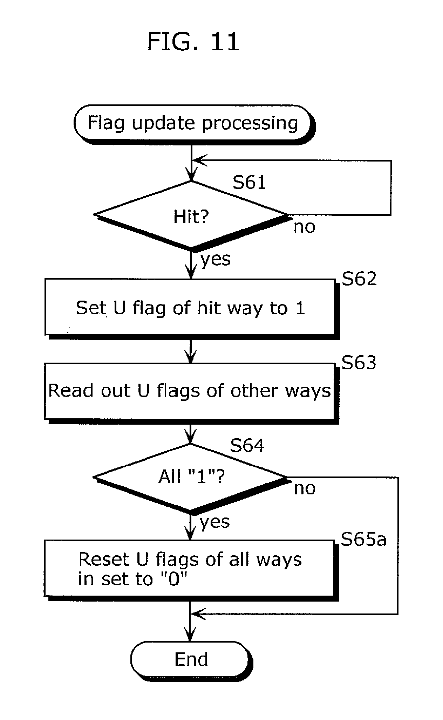

FIG. 11 is a flowchart showing a flag updating processing in this variation. Compared to FIG. 6, FIG. 11 differs in that there is Step S65a instead of Step S65. The explanation of same points is omitted here, providing only an explanation of different point. In Step S65a, the flag update unit 39 resets all use flags U0 to U3 in the set to 0. Thus, according to the flag updating processing shown in FIG. 11, when all use flags U0 to U3 in the set are about to be turned to 1, they are reset to 0. The similar hit ratio as in FIG. 5 can be obtained in FIG. 11.

(2) In Step S93 shown in FIG. 9, in the case where there are multiple cache entries whose use flags in the set are 0, the replace unit 40 randomly selects one of the multiple cache entries. Instead, the replace unit 40 may orderly select one cache entry. For example, in such case, the replace unit 40 may select a way with smaller (larger) number or select in a round-robin method.

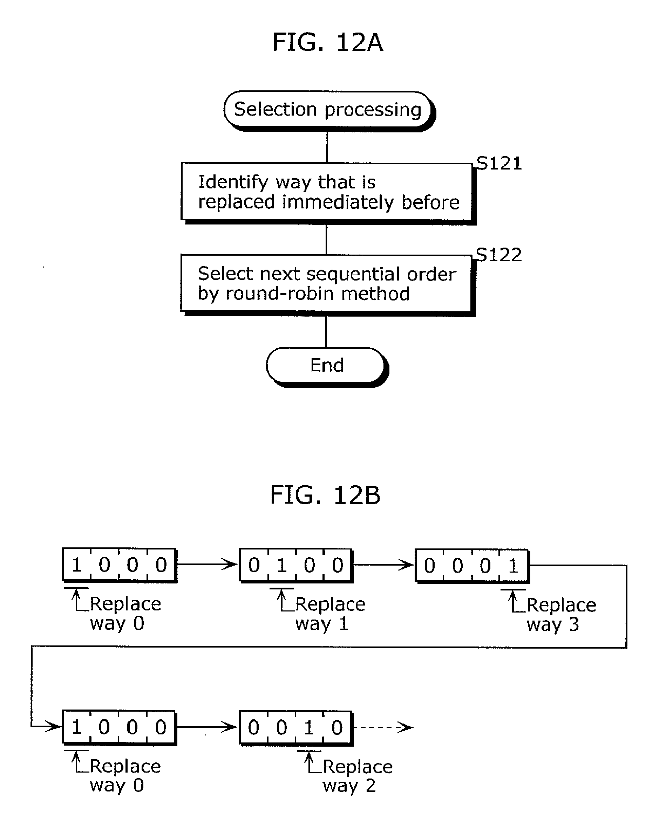

FIG. 12A shows selection processing using the round-robin method. In the diagram, the replace unit 40 identifies a number of the way that has been replaced immediately before in the case where there are multiple cache entries whose use flags are 0 in the set (Step S121), and selects, from among the cache entries whose use flags are 0, a cache entry of a way whose number is larger than the identified number (Step S122). Here, the previously replaced number may be identified, for example, by setting a register for holding the numbers of replaced ways in the cache memory as a whole and by referring to the register. This register may indicate the replaced ways by bit locations instead of holding the way numbers. FIG. 12B shows an example of a register herein. In the diagram, it is shown a state transition of a filed of four bits in the register. The bit locations of the four bits respectively correspond to way 0 to way 3. A bit of "1" in the four bits indicates a way that is previously replaced. In Step S122, the replace unit 40 identifies, from among the cache entries whose use flags are 0 in the set, a closest bit in a direction rotating towards right starting from the bit of "1", and selects a cache entry of the way corresponding to the bit location. In the example of FIG. 12B, cache entries are selected in order of ways 0, 1, 3, 0 and 2.

Note that, while a common register for all sets is shown in FIG. 12B, it is possible to have a separate register for each set.

(3) While, in the aforementioned embodiment, an example of a cache memory of a four-way set-associative is explained, the number of ways may be 8 ways or 16 ways. In addition, while an example of the number of sets of 16 is explained in the aforementioned embodiment, the number of sets may be any numbers.

(4) While, in the aforementioned embodiment, an example of a cache memory of a set-associative is explained, the cache memory may be in a full-associative method.

(5) The use flag U may be 2 bits instead of 1 bit. For example, it is not necessary to completely show an access order of individual cache entry even in the case of 2 bits and is only necessary to relatively identify at least two states of old and new. The third state and fourth state which can be represented in 2 bits may be defined in any manners.

(6) While, in Step S95 shown in FIG. 9, the use flag U that is replaced immediately before is initialized to 1, it may be initialized to 0 instead. However, in the case where the initial value of the use flag is 0, there is a possibility that the cache entry may be replaced again due to the cache miss caused after the replacement. In this point, it is desired to set the initial value as 1.

(Second Embodiment)

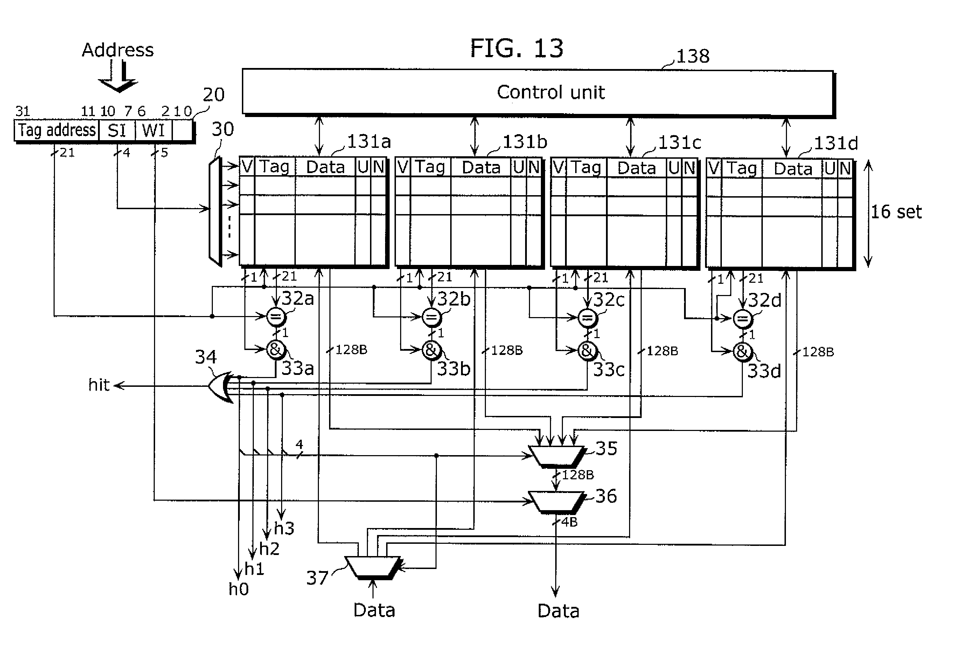

FIG. 13 is a block diagram showing a structure of a cache memory according to the second embodiment of the present invention. Compared to the structure shown in FIG. 2, the cache memory in the diagram differs in that it has ways 131a to 131d instead of ways 31a to 31 d, and a control unit 138 instead of the control unit 38. Hereafter, the different point is mainly explained omitting the explanation about same points.

The way 131a differs from the way 31a in that a new flag is added to each cache entry.

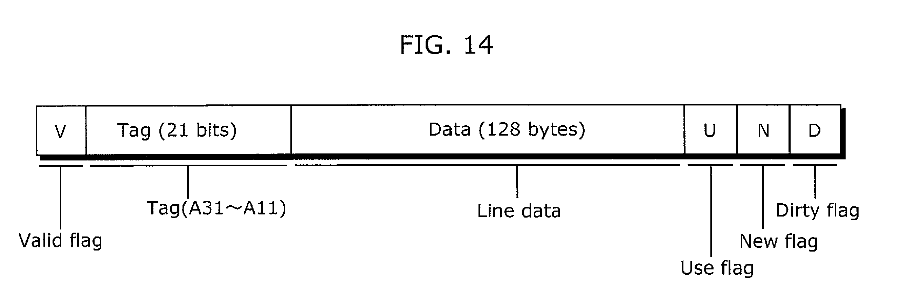

FIG. 14 shows a bit structure of one cache entry in the way 131a. As shown in the diagram, it only differs in that a new flag N is added. An initial value of 1 is set to the new flag N immediately after the replacement (or immediately after the fill) and the value is reset to 0 when there the cache entry has been accessed. In other words, the value 1 of the new flag N indicates that the cache entry has not been accessed even once since the replacement (or fill) and is in a new state.

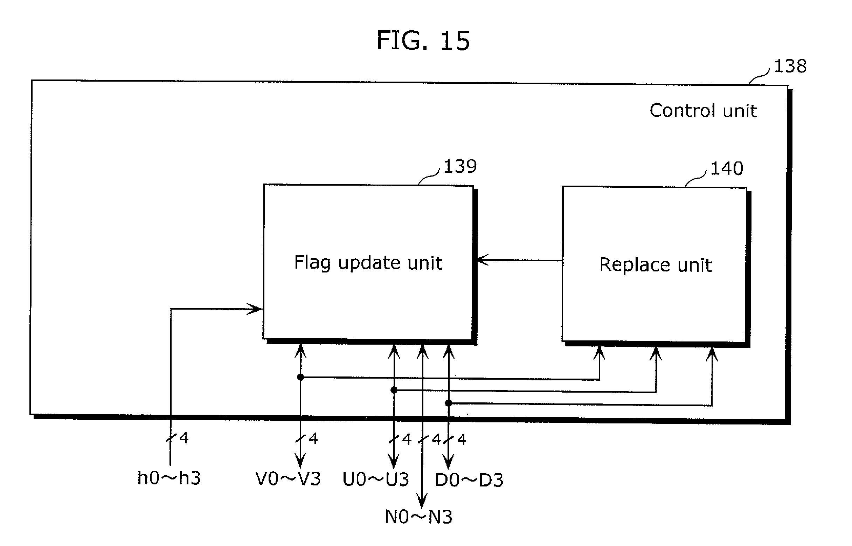

As shown in FIG. 15, the control unit 138 has a flag update unit 139 and a replace unit 140, and differs from the control unit 38 in that it sets and updates the new flag N and ignores the cache entry whose new flag is 1 at the replacement from the target to be replaced.

<Replacement Processing>

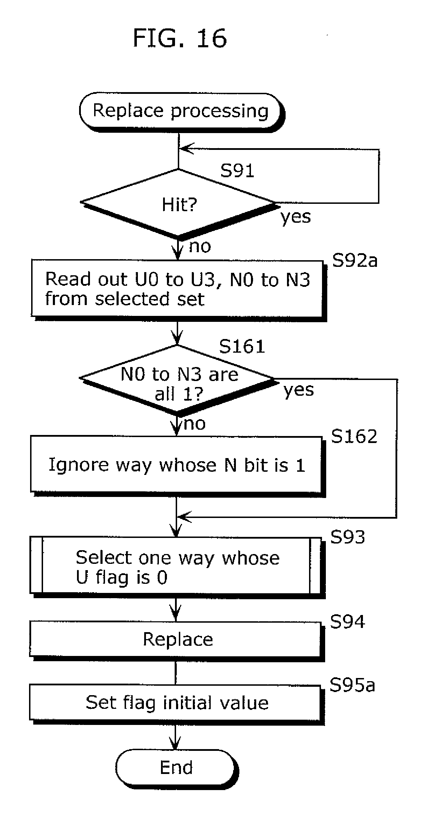

FIG. 16 is a flowchart showing a replacement processing performed by the replace unit 140. Compared to FIG. 9, FIG. 16 differs in that there is Step S92a instead of Step S92, that Steps S161 and 5162 are added between Steps 92a and 93, and that there is Step S95a instead of Step S95.

In Step S92a, the replace unit 140 reads out four new flags (referred to as N0 to N3) in addition to use flags U0 to U3 of the four ways in the set selected by the set index.

Further, the replace unit 140 judges whether or not all of the read four of the new flags N0 to N3 are 1 (Step S161), and moves to Step S93 when all of them are 1, and ignores ways whose new flags N are 1 from among the use flags U are 0 (Step S162) when all of them are not 1 (there is 0).

Furthermore, in step S93, the replace unit 140 selects one way to be replaced from among the ways whose use flags and new flags are 0. However, the replace unit 140 selects: in the case where all of the four new flags are 1, one of a way to be replaced from among the ways whose use flags U are 0; in the case where all of the four use flags are 1, one of a way to be replaced from among the ways whose use flags are 1 ignoring the new flags N; in the case where there is no way whose use flag is U=0 and new flag is N=0, one of a way to be replaced from among the ways whose use flags U=0 ignoring the new flag N.

Also, in step S95a, the replace unit 140 initializes the new flag N to 1 together with the initializations of other flags.

<Flag Updating Processing>

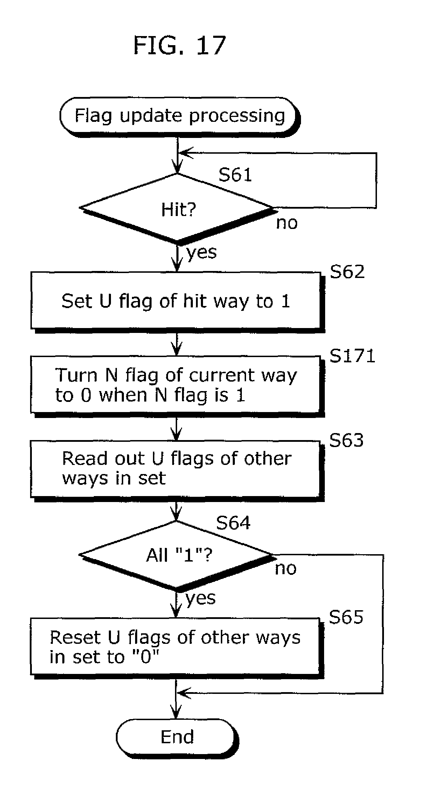

FIG. 17 is a flowchart showing a flag updating processing performed by the flag update unit 139. Compared to FIG. 6, FIG. 17 differs in that Step S171 is added between Step S62 and S63.

In Step S171, the flag update unit 139 resets, for example, a value 1 of a new flag of a cache entry of the hit way in the selected set to 0. Accordingly, a new flag N of the cache entry which has been accessed once is reset to 0.

As described above, the replace unit 140 according to the present embodiment ignores, in the case where a cache entry has a new flag of 1, the cache entry from the target to be replaced. This is based on the following reason. In specific, the use flag U having the initial value of 1 is reset to 0 when use flags of other ways are sequentially turned to 1. In other words, there is a case where even a cache entry whose use flag U is 0- has not been accessed. In the case where thus the use flag is turned to 0, there is a possibility that the cache entry which has not been accessed even once after the replacement may be selected as a target to be replaced again due to an occurrence of cache miss. Therefore, by setting a new flag N, it can be prevented that a cache entry which has not been accessed even once after the replacement is replaced.

<Variations>

(1) The variations (1) to (5) according to the first embodiment may be applied to the present embodiment.
(2) While, in Step S95a shown in FIG. 16, the use flag U that is replaced immediately before is initialized to 1, it may be initialized to 0 instead. Differing from the case of the first embodiment, a new flag N is set in the present embodiment. Therefore, both of the cases of where the initial value of the use flag is 1 and 0, it can be prevented that a cache entry is replaced again while not being accessed even once due to a cache miss occurred after the replacement.
(3) The cache memory according to each embodiment may be applied to any one of an on-chip cache installed in a chip together with a processor, an off-chip cache, an instruction cache, and a data cache.

**Industrial Applicability**

The present invention is suited to a cache memory for realizing a high-speed memory access and to a control method thereof. For example, it is suited to an on-chip cache memory, an off-ship cache memory, a data cache memory, an instruction cache memory and the like.

**Claims**

**1.** A cache memory comprising:

a storing unit operable to hold, for each cache entry, one-bit access information indicating whether or not the cache entry has been accessed, the cache entry holding data that is a unit of caching; and

a selection unit operable to select a cache entry to be replaced from among cache entries corresponding to respective pieces of access information indicating that cache entries have not been accessed.

**2.** The cache memory according to Claim 1, wherein said selection unit is operable to randomly select one cache entry from among the cache entries corresponding to respective pieces of access information indicating that the cache entries have not been accessed.

**3.** The cache memory according to Claim 1, wherein said selection unit is operable to select one cache entry in a round-robin manner from among the cache entries corresponding to the respective pieces of access information indicating that the cache entries have not been accessed.

**4.** The cache memory according to Claim 1, further comprising:

an update unit operable to update, when a cache entry is hit, a piece of access information corresponding to the hit cache entry so that the piece of access information indicates that the hit cache entry has been accessed, and operable to reset, in the case where respective pieces of access information corresponding to all of other cache entries indicate that the cache entries have been accessed, the respective pieces of access information corresponding to the all of other cache entries so that the respective pieces of access information indicate that the cache entries have not been accessed.

**5.** The cache memory according to Claim 4, wherein said update unit is further operable to reset the piece of access information corresponding to the hit cache entry at the time of the reset, so that the piece of access information indicates that the hit cache entry has not been accessed.

**6.** The cache memory according to Claim 5, wherein:

said storing unit further operable to hold, for each cache entry, a new piece of information indicating whether or not the cache entry is in a new state immediately after storage of data in the cache entry from a memory; said update unit is further operable to reset, when a cache entry is hit, a new piece of information corresponding to the hit cache entry so that the new piece of information indicates that the hit cache entry is not in a new state; and said selection unit is operable to preferentially select, as a cache entry to be replaced, a cache entry corresponding to the new piece of information indicating that the cache entry is not in a new state, from among the cache entries corresponding to the respective pieces of access information indicating that the cache entries have not been accessed.

**7.** The cache memory according to Claim 6, wherein said selection unit is operable to select a cache entry to be replaced ignoring a new piece of information, in the case where there is no cache entry which corresponds to a piece of access information indicating that the cache entry has not been accessed and corresponds to the new piece of information indicating that the cache entry is not in a new state.

**8.** The cache memory according to Claim 6, wherein said selection unit is operable to select a cache entry to be replaced ignoring a new piece of information, in the case where there is only a cache entry which corresponds to one of the following: a piece of access information indicating that the cache entry has been accessed; and the new piece of information indicating that the cache entry is in a new state.

**9.** The cache memory according to Claim 1, wherein said cache memory adopts a set-associative method and further comprises:

an update unit operable to update, when a cache entry is hit, a piece of access information corresponding to the hit cache entry so that the piece of access information indicates that the hit cache entry has been accessed, and operable to reset, in the case where respective pieces of access information corresponding to all of other cache entries in the same set as the hit cache entry indicate that the cache entries have been accessed, the respective pieces of access information corresponding to the all of other cache entries so that the respective pieces of access information indicate that the cache entries have not been accessed.

**10.** The cache memory according to Claim 9,
wherein said update unit is further operable to reset the piece of access information corresponding to the hit cache entry at the time of the reset, to the piece of access information indicating that the hit cache entry has not been accessed.

**11.** The cache memory according to Claim 10, wherein:

said storing unit further holds, for each cache entry, a piece of new information indicating whether or not a cache entry is in a new state immediately after storage of data in the cache entry;
said update unit is further operable to reset, when a cache entry is hit, a new piece of information corresponding to the hit cache entry so that the new piece of information indicates that the hit cache entry is not in a new state; and
said selection unit is operable to select a cache entry to be replaced, from among the cache entries in the same set corresponding to respective pieces of access information indicating that the cache entries have not been accessed and corresponding to respective pieces of new information indicating that the cache entries are in a new state.

**12.** The cache memory according to Claim 11,
wherein said selection unit is operable to select a cache entry to be replaced ignoring a new piece of information, in the case where there is no cache entry which corresponds to a piece of access information indicating that the cache entry has not been accessed and corresponds to the new piece of information indicating that the cache entry is not in a new state.

**13.** The cache memory according to Claim 11,
wherein said selection unit is operable to select a cache entry to be replaced ignoring a new piece of information, in the case where there is only a cache entry which corresponds to one of the following: a piece of access information indicating that the cache entry has been accessed; and the new piece of information indicating that the cache entry is in a new state.

**14.** The cache memory according to Claim 1, further comprising:

a detection unit operable to detect that a cache entry is hit;
a first update unit operable to update a piece of access information corresponding to the hit cache entry so that the piece of access information indicates that the hit cache entry has been accessed;
a judging unit operable to judge whether or not respective pieces of access information corresponding to all cache entries other than the hit cache entry indicate that the cache entries have been accessed; and
a second update unit operable to update, when a judgment result obtained by said judging unit is positive, the respective pieces of access information corresponding to the all of other cache entries so that the respective pieces of access information indicate that the cache entries have not been accessed.

**15.** The cache memory according to Claim 14, wherein:

said storing unit is further operable to hold, for each cache entry, a new piece of information indicating whether or not the cache entry is in a new state immediately after storage of data in the cache entry from a memory;
said first update unit is further operable to reset a new piece of information corresponding to the hit cache entry so that the new piece of information indicates that the hit cache entry is not in a new state; and
said selection unit is operable to preferentially select, as a cache entry to be replaced, a cache entry corresponding to the new piece of information indicating that the cache entry is not in a new state, from among the cache entries corresponding to the respective pieces of access information indicating that the cache entries have not been accessed.

**16.** The cache memory according to Claim 1,
wherein said cache memory adopts a set-associative method and further comprises:

a detection unit operable to detect that a cache entry is hit;
a first update unit operable to update a piece of access information corresponding to the hit cache entry so that the piece of access information indicates that the hit cache entry has been accessed;
a judging unit operable to judge whether or not respective pieces of access information corresponding to all of other cache entries in the same set as the hit cache entry indicate that the cache entries have been accessed; and

a second update unit operable to update, when a judgment result obtained by said judging unit is positive, the pieces of access information corresponding to the all of other cache entries so that the pieces of access information indicate that the cache entries have not been accessed.

**17.** The cache memory according to Claim 16, wherein:

said storing unit is further operable to hold, for each cache entry, a new piece of information indicating whether or not the cache entry is in a new state immediately after storage of data in the cache entry;

said first update unit is further operable to reset a new piece of information corresponding to the hit cache entry so that the new piece of information indicates that the hit cache entry is not in a new state; and

said selection unit is operable to preferentially select, as a cache entry to be replaced, a cache entry corresponding to the new piece of information indicating that the cache entry is not in a new state, from among the cache entries corresponding to the respective pieces of access information indicating that the cache entries have not been accessed in the same set.

**18.** A method for controlling a cache memory including, for each cache entry of the cache memory, a storing unit for storing a piece of access information indicating whether or not the cache entry has been accessed, said method comprising:

a detection step of detecting a cache hit and a cache miss;

a first update step of updating a piece of one-bit access information corresponding to the hit cache entry, to the piece of access information indicating that the hit cache entry has been accessed;

a judging step of judging whether or not respective pieces of access information corresponding to all cache entries other than the hit cache entry indicate that the cache entries have been accessed;

a second update step of updating, in the case where a judgment result obtained in said judging step is positive, the respective pieces of access information corresponding to the all of other cache entries so that the respective pieces of access information indicate that the cache entries have not been accessed; and

a selection step of selecting, when the cache miss is detected, a cache entry to be replaced, from among the cache entries corresponding to the respective pieces of access information indicating that the cache entries have not been accessed.

**Amended claims under Art. 19.1 PCT**

**1.** A cache memory comprising:

a storing unit operable to hold, for each cache entry, one-bit access information indicating whether or not the cache entry has been accessed, the cache entry holding data that is a unit of caching; and

a selection unit operable to select a cache entry to be replaced from among cache entries corresponding to respective pieces of access information indicating that cache entries have not been accessed.

**2.** The cache memory according to Claim 1, wherein said selection unit is operable to randomly select one cache entry from among the cache entries corresponding to respective pieces of access information indicating that the cache entries have not been accessed.

**3.** The cache memory according to Claim 1, wherein said selection unit is operable to select one cache entry in a round-robin manner from among the cache entries corresponding to the respective pieces of access information indicating that the cache entries have not been accessed.

**4.** The cache memory according to Claim 1, further comprising:

an update unit operable to update, when a cache entry is hit, a piece of access information corresponding to the hit cache entry so that the piece of access information indicates that the hit cache entry has been accessed, and operable to reset, in the case where respective pieces of access information corresponding to all of other cache entries indicate that the cache entries have been accessed, the respective pieces of access information corresponding to the all of other cache entries so that the respective pieces of access information indicate that the cache entries have not been accessed.

**5.** The cache memory according to Claim 4,
wherein said update unit is further operable to reset the piece of access information corresponding to the hit cache entry at the time of the reset, so that the piece of access information indicates that the hit cache entry has not been accessed.

**6.** The cache memory according to Claim 5, wherein:

said storing unit further operable to hold, for each cache entry, a new piece of information indicating whether or not the cache entry is in a new state immediately after storage of data in the cache entry from a memory;
said update unit is further operable to reset, when a cache entry is hit, a new piece of information corresponding to the hit cache entry so that the new piece of information indicates that the hit cache entry is not in a new state; and
said selection unit is operable to preferentially select, as a cache entry to be replaced, a cache entry corresponding to the new piece of information indicating that the cache entry is not in a new state, from among the cache entries corresponding to the respective pieces of access information indicating that the cache entries have not been accessed.

**7.** The cache memory according to Claim 6,
wherein said selection unit is operable to select a cache entry to be replaced ignoring a new piece of information, in the case where there is no cache entry which corresponds to a piece of access information indicating that the cache entry has not been accessed and corresponds to the new piece of information indicating that the cache entry is not in a new state.

**8.** The cache memory according to Claim 6,
wherein said selection unit is operable to select a cache entry to be replaced ignoring a new piece of information, in the case where there is only a cache entry which corresponds to one of the following: a piece of access information indicating that the cache entry has been accessed; and the new piece of information indicating that the cache entry is in a new state.

**9.** The cache memory according to Claim 1,
wherein said cache memory adopts a set-associative method and further comprises:

an update unit operable to update, when a cache entry is hit, a piece of access information corresponding to the hit cache entry so that the piece of access information indicates that the hit cache entry has been accessed, and operable to reset, in the case where respective pieces of access information corresponding to all of other cache entries in the same set as the hit cache entry indicate that the cache entries have been accessed, the respective pieces of access information corresponding to the all of other cache entries so that the respective pieces of access information indicate that the cache entries have not been accessed.

**10.** The cache memory according to Claim 9,
wherein said update unit is further operable to reset the piece of access information corresponding to the hit cache entry at the time of the reset, to the piece of access information indicating that the hit cache entry has not been accessed.

**11.** (Amended) The cache memory according to Claim 10, wherein:

said storing unit further holds, for each cache entry, a piece of new information indicating whether or not a cache entry is in a new state immediately after storage of data in the cache entry;
said update unit is further operable to reset, when a cache entry is hit, a new piece of information corresponding to the hit cache entry so that the new piece of information indicates that the hit cache entry is not in a new state; and
said selection unit is operable to select a cache entry to be replaced, from among the cache entries in the same set corresponding to respective pieces of access information indicating that the cache entries have not been accessed and corresponding to respective pieces of new information indicating that the cache entries are not in a new state.

**12.** The cache memory according to Claim 11,
wherein said selection unit is operable to select a cache entry to be replaced ignoring a new piece of information, in the case where there is no cache entry which corresponds to a piece of access information indicating that the cache entry has not been accessed and corresponds to the new piece of information indicating that the cache entry is not in a new state.

**13.** The cache memory according to Claim 11,
wherein said selection unit is operable to select a cache entry to be replaced ignoring a new piece of information, in the case where there is only a cache entry which corresponds to one of the following: a piece of access information indicating that the cache entry has been accessed; and the new piece of information indicating that the cache entry is in a new state.

**14.** The cache memory according to Claim 1, further comprising:

a detection unit operable to detect that a cache entry is hit;
a first update unit operable to update a piece of access information corresponding to the hit cache entry so that the piece of access information indicates that the hit cache entry has been accessed;
a judging unit operable to judge whether or not respective pieces of access information corresponding to all cache entries other than the hit cache entry indicate that the cache entries have been accessed; and
a second update unit operable to update, when a judgment result obtained by said judging unit is positive, the respective pieces of access information corresponding to the all of other cache entries so that the respective pieces of access information indicate that the cache entries have not been accessed.

**15.** The cache memory according to Claim 14, wherein:

said storing unit is further operable to hold, for each cache entry, a new piece of information indicating whether or not the cache entry is in a new state immediately after storage of data in the cache entry from a memory;
said first update unit is further operable to reset a new piece of information corresponding to the hit cache entry so that the new piece of information indicates that the hit cache entry is not in a new state; and
said selection unit is operable to preferentially select, as a cache entry to be replaced, a cache entry corresponding to the new piece of information indicating that the cache entry is not in a new state, from among the cache entries corresponding to the respective pieces of access information indicating that the cache entries have not been accessed.

**16.** The cache memory according to Claim 1,
wherein said cache memory adopts a set-associative method and further comprises:

a detection unit operable to detect that a cache entry is hit;
a first update unit operable to update a piece of access information corresponding to the hit cache entry so that the piece of access information indicates that the hit cache entry has been accessed;
a judging unit operable to judge whether or not respective pieces of access information corresponding to all of other cache entries in the same set as the hit cache entry indicate that the cache entries have been accessed; and
a second update unit operable to update, when a judgment result obtained by said judging unit is positive, the pieces of access information corresponding to the all of other cache entries so that the pieces of access information indicate that the cache entries have not been accessed.

**17.** The cache memory according to Claim 16, wherein:

said storing unit is further operable to hold, for each cache entry, a new piece of information indicating whether or not the cache entry is in a new state immediately after storage of data in the cache entry;
said first update unit is further operable to reset a new piece of information corresponding to the hit cache entry so that the new piece of information indicates that the hit cache entry is not in a new state; and
said selection unit is operable to preferentially select, as a cache entry to be replaced, a cache entry corresponding to the new piece of information indicating that the cache entry is not in a new state, from among the cache entries corresponding to the respective pieces of access information indicating that the cache entries have not been accessed in the same set.

**18.** A method for controlling a cache memory including, for each cache entry of the cache memory, a storing unit for storing a piece of access information indicating whether or not the cache entry has been accessed, said method comprising:

a detection step of detecting a cache hit and a cache miss;

a first update step of updating a piece of one-bit access information corresponding to the hit cache entry, to the piece of access information indicating that the hit cache entry has been accessed;

a judging step of judging whether or not respective pieces of access information corresponding to all cache entries other than the hit cache entry indicate that the cache entries have been accessed;

a second update step of updating, in the case where a judgment result obtained in said judging step is positive, the respective pieces of access information corresponding to the all of other cache entries so that the respective pieces of access information indicate that the cache entries have not been accessed; and

a selection step of selecting, when the cache miss is detected, a cache entry to be replaced, from among the cache entries corresponding to the respective pieces of access information indicating that the cache entries have not been accessed.

FIG. 1

# FIG. 2

EP 1 667 028 A1

## FIG. 3

| V | Tag (21 bits) | Data (128 bytes) | U | D |
|---|---|---|---|---|

Valid flag

Tag(A31~A11)

Line data

Use flag

Dirty flag

EP 1 667 028 A1

## FIG. 4

Control unit [38]

Flag update unit [39]

Replace unit [40]

h0~h3    V0~V3    U0~U3    D0~D3

4        4        4        4

EP 1 667 028 A1

## FIG. 5

|  | Way 0 | Way 1 | Way 2 | Way 3 |
|---|---|---|---|---|

Set N    [ 1 ]    [ 0 ]    [ 1 ]    [ 0 ]

Way 1 hit

Set N    [ 1 ]    [ 1 ]    [ 1 ]    [ 0 ]

Way 3 hit

Set N    [ 0 ]    [ 0 ]    [ 0 ]    [ 1 ]

EP 1 667 028 A1

# FIG. 6

```
        ( Flag update processing )
                    │
                    ▼           S61
              ╱─────────╲
             ╱   Hit?    ╲──── no
              ╲─────────╱
                    │ yes
                    ▼                    S62
        ┌──────────────────────┐
        │ Set U flag of hit way to 1 │
        └──────────────────────┘
                    │                    S63
                    ▼
        ┌──────────────────────┐
        │ Read out U flags of other │
        │ ways in set                │
        └──────────────────────┘
                    │           S64
                    ▼
              ╱─────────╲
             ╱  All "1"?  ╲──── no
              ╲─────────╱
                    │ yes                S65
                    ▼
        ┌──────────────────────┐
        │ Reset U flags of other ways │
        │ in set to "0"               │
        └──────────────────────┘
                    │
                    ▼
               (   End   )
```

FIG. 7

| No. | Input | | | | | | | | Output | | | |
|---|---|---|---|---|---|---|---|---|---|---|---|---|
| | h0 | h1 | h2 | h3 | U0_in | U1_in | U2_in | U3_in | U0_out | U1_out | U2_out | U3_out |
| 1 | 1 | 0 | 0 | 0 | (0) | *a | *a | *a | (1) | U1_in | U2_in | U3_in |
| 2 | 1 | 0 | 0 | 0 | (1) | *a | *a | *a | (1) | U1_in | U2_in | U3_in |
| 3 | 1 | 0 | 0 | 0 | (0) | [1] | [1] | [1] | (1) | [0] | [0] | [0] |
| 4 | 1 | 0 | 0 | 0 | (1) | [1] | [1] | [1] | (1) | [0] | [0] | [0] |
| 5 | 0 | 1 | 0 | 0 | *b | (0) | *b | *b | U0_in | (1) | U2_in | U3_in |
| 6 | 0 | 1 | 0 | 0 | *b | (1) | *b | *b | U0_in | (1) | U2_in | U3_in |
| 7 | 0 | 1 | 0 | 0 | [1] | (0) | [1] | [1] | [0] | (1) | [0] | [0] |
| 8 | 0 | 1 | 0 | 0 | [1] | (1) | [1] | [1] | [0] | (1) | [0] | [0] |
| 9 | 0 | 0 | 1 | 0 | *c | *c | (0) | *c | U0_in | U1_in | (1) | U3_in |
| 10 | 0 | 0 | 1 | 0 | *c | *c | (1) | *c | U0_in | U1_in | (1) | U3_in |
| 11 | 0 | 0 | 1 | 0 | [1] | [1] | (0) | [1] | [0] | [0] | (1) | [0] |
| 12 | 0 | 0 | 1 | 0 | [1] | [1] | (1) | [1] | [0] | [0] | (1) | [0] |
| 13 | 0 | 0 | 0 | 1 | *d | *d | *d | (0) | U0_in | U1_in | U2_in | (1) |
| 14 | 0 | 0 | 0 | 1 | *d | *d | *d | (1) | U0_in | U1_in | U2_in | (1) |
| 15 | 0 | 0 | 0 | 1 | [1] | [1] | [1] | (0) | [0] | [0] | [0] | (1) |
| 16 | 0 | 0 | 0 | 1 | [1] | [1] | [1] | (1) | [0] | [0] | [0] | (1) |

EP 1 667 028 A1

FIG. 8

# FIG. 9

```
        ( Replace processing )
                 │
                 │◄─────────────┐
                 ▼      S91      │
              ╱──────╲           │
             ╱  Hit?  ╲──────────┘
             ╲        ╱  yes
              ╲──────╱
                 │ no
                 ▼           S92
        ┌────────────────────┐
        │ Read out U0 to U3  │
        │ from selected set  │
        └────────────────────┘
                 │           S93
        ┌────────────────────┐
        │ Select one way     │
        │ whose U flag is 0  │
        └────────────────────┘
                 │           S94
        ┌────────────────────┐
        │     Replace        │
        └────────────────────┘
                 │           S95
        ┌────────────────────┐
        │ Set flag initial   │
        │      value         │
        └────────────────────┘
                 │
                 ▼
              ( End )
```

## FIG. 10

|  | Way 0 | Way 1 | Way 2 | Way 3 |
|---|---|---|---|---|
| Set N | 1 | 0 | 1 | 0 |

Way 1 hit

| Set N | 1 | 1 | 1 | 0 |
|---|---|---|---|---|

Way 3 hit

| Set N | 0 | 0 | 0 | 0 |
|---|---|---|---|---|

# FIG. 11

```
┌──────────────────────────────┐
│     Flag update processing   │
└──────────────────────────────┘
                 │
                 ▼
            ╱ S61 ╲◄─────────────┐
           ╱  Hit?  ╲─── no ──────┘
            ╲       ╱
             ╲     ╱
              │ yes
              ▼
   ┌──────────────────────────┐ S62
   │  Set U flag of hit way to 1 │
   └──────────────────────────┘
              │
              ▼
   ┌──────────────────────────┐ S63
   │ Read out U flags of other ways │
   └──────────────────────────┘
              │
              ▼
           ╱ S64 ╲
          ╱ All "1"? ╲─── no ──────┐
           ╲        ╱               │
            │ yes                   │
            ▼                       │
   ┌──────────────────────────┐ S65a│
   │  Reset U flags of all ways │    │
   │  in set to "0"             │    │
   └──────────────────────────┘     │
              │◄───────────────────┘
              ▼
         ┌──────────┐
         │    End   │
         └──────────┘
```

# FIG. 12A

```
( Selection processing )
           |
           |                                    S121
  ┌────────────────────────┐
  │ Identify way that is    │
  │ replaced immediately before │
  └────────────────────────┘
           |
           |                                    S122
  ┌────────────────────────┐
  │ Select next sequential order │
  │ by round-robin method    │
  └────────────────────────┘
           |
       (  End  )
```

# FIG. 12B

```
┌─┬─┬─┬─┐      ┌─┬─┬─┬─┐      ┌─┬─┬─┬─┐
│1│0│0│0│ ───> │0│1│0│0│ ───> │0│0│0│1│ ──┐
└─┴─┴─┴─┘      └─┴─┴─┴─┘      └─┴─┴─┴─┘   │
  ↑Replace       ↑Replace         ↑Replace │
   way 0          way 1            way 3   │
                                          │
┌─────────────────────────────────────────┘
│
│ ┌─┬─┬─┬─┐      ┌─┬─┬─┬─┐
└>│1│0│0│0│ ───> │0│0│1│0│ ----->
  └─┴─┴─┴─┘      └─┴─┴─┴─┘
   ↑Replace         ↑Replace
    way 0            way 2
```

26

# FIG. 13

Control unit — 138

Address

31    11 10  7 6   2 1 0
| Tag address | SI | WI | |

21    4    5

20

30

131a    131b    131c    131d

| V | Tag | Data | U | N |

16 set

32a    32b    32c    32d

33a    33b    33c    33d

128B

hit ←    34

h3
h2
h1
h0

35
36
37

Data    Data

EP 1 667 028 A1

FIG. 14

| V | Tag (21 bits) | Data (128 bytes) | U | N | D |
|---|---|---|---|---|---|

Valid flag

Tag(A31~A11)

Line data

Use flag

New flag

Dirty flag

EP 1 667 028 A1

## FIG. 15

# FIG. 16

Replace processing

S91 — Hit?
yes (loop back)
no

S92a — Read out U0 to U3, N0 to N3 from selected set

S161 — N0 to N3 are all 1?
yes
no

S162 — Ignore way whose N bit is 1

S93 — Select one way whose U flag is 0

S94 — Replace

S95a — Set flag initial value

End

# FIG. 17

```
        ( Flag update processing )
                    │
                    ▼◄──────────────┐
                   ╱╲  S61          │
                  ╱  ╲              │
                 ╱Hit?╲─────────────┘
                 ╲    ╱  no
                  ╲  ╱
                   ╲╱
                    │ yes
                    ▼                    S62
        ┌──────────────────────────┐
        │ Set U flag of hit way to 1│
        └──────────────────────────┘
                    │
                    ▼                    S171
        ┌──────────────────────────┐
        │ Turn N flag of current way│
        │ to 0 when N flag is 1     │
        └──────────────────────────┘
                    │
                    ▼                    S63
        ┌──────────────────────────┐
        │ Read out U flags of other │
        │ ways in set               │
        └──────────────────────────┘
                    │
                    ▼
                   ╱╲  S64
                  ╱  ╲
                 ╱All ╲────────────┐
                 ╲"1"?╱  no         │
                  ╲  ╱              │
                   ╲╱               │
                    │ yes           │
                    ▼          S65  │
        ┌──────────────────────────┐│
        │ Reset U flags of other ways││
        │ in set to "0"             ││
        └──────────────────────────┘│
                    │◄──────────────┘
                    ▼
                ( End )
```

<div align="center">

**INTERNATIONAL SEARCH REPORT**

</div>

| | International application No. |
|---|---|
| | PCT/JP2004/012421 |

**A. CLASSIFICATION OF SUBJECT MATTER**
$$Int.Cl^7 \quad G06F12/12, \quad G06F12/08$$

According to International Patent Classification (IPC) or to both national classification and IPC

**B. FIELDS SEARCHED**

Minimum documentation searched (classification system followed by classification symbols)
$$Int.Cl^7 \quad G06F12/08-12/12$$

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 6-19797 A (Sun Micro Systems Inc.), 28 January, 1994 (28.01.94), | 1-5,9,10,14, 16,18 |
| A | Par. Nos. [0013] to [0015]; Fig. 2 & US 5353425 A Column 3, lines 6 to 68; Fig. 2 & EP 0568221 A1 Column 3, line 38 to column 4, line 49; Fig. 2 | 6-8,11-13, 15,17 |
| A | JP 3-62144 A (Bull S.A.), 18 March, 1991 (18.03.91), Page 5, upper left column, line 18 to upper right column, line 13 & US 5218687 A Column 3, lines 19 to 35 & EP 0392932 A1 & FR 2645986 A1 | 1-18 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 28 September, 2004 (28.09.04) | 12 October, 2004 (12.10.04) |

| Name and mailing address of the ISA/<br>Japanese Patent Office | Authorized officer |
|---|---|
| Facsimile No. | Telephone No. |

Form PCT/ISA/210 (second sheet) (January 2004)

## INTERNATIONAL SEARCH REPORT

| | International application No. |
|---|---|
| | PCT/JP2004/012421 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 4-288647 A  (Mitsubishi Electric Corp.),<br>13 October, 1992 (13.10.92),<br>(Family: none) | 6-8,11-13,<br>15,17 |
| A | JP 55-157181 A  (NEC Corp.),<br>06 December, 1980 (06.12.80),<br>& US 4349875 A          & FR 2457542 A1 | 6-8,11-13,<br>15,17 |

Form PCT/ISA/210 (continuation of second sheet) (January 2004)